# EUROPEAN PATENT APPLICATION

(11) **EP 4 642 142 A1**
(43) Date of publication of application: **29.10.2025**
(21) Application number: 22968983.1
(22) Date of filing: 23.12.2022
(51) Int. Cl.: H04W 76/10

(54) **ENERGY-SAVING METHOD AND APPARATUS, TERMINAL, AND NETWORK DEVICE**

(71) Applicant: GUANGDONG OPPO MOBILE TELECOMMUNICATIONS CORP., LTD., Dongguan, Guangdong 523860 (CN)
(72) Inventor: WANG, Shukun, Dongguan, Guangdong 523860 (CN); WU, Zuomin, Dongguan, Guangdong 523860 (CN); SHI, Cong, Dongguan, Guangdong 523860 (CN)
(74) Representative: Aldridge, Henry Alexander
(86) International application number: PCT/CN2022/141367
(87) International publication number: WO 2024/130694

(57) **Abstract**

The embodiments of the present application provide an energy-saving method and apparatus, a terminal, and a network device. The method comprises: a terminal receiving first configuration information sent by a network device, the first configuration information being used for configuring discontinuous transmission (DTX) and/or discontinuous reception (DRX) of a cell.

## Description

### TECHNICAL FIELD

Embodiments of the present disclosure relate to the technical field of mobile communications, and in particular to, an energy-saving method and device, a terminal, and a network device.

### BACKGROUND

Compared with a 4th Generation (4G) network, energy consumption of the a 5th Generation (5G) network has multiplied. For example, the energy consumption of a 5G base station is four times large than a 4G base station. With development of the mobile communication technology, the energy consumption of a network side will increase, which will bring huge network operation and maintenance costs to operators. Therefore, how to perform the Network Energy Saving (NES) needs to be solved.

### SUMMARY

Embodiments of the present disclosure provide an energy-saving method and device, a terminal, a network device, a chip, a computer-readable storage medium, a computer program product, and a computer program.

The energy-saving method provided by the embodiment of the present disclosure includes a following operation.

A terminal receives first configuration information sent by a network device, where the first configuration information is for configuring a cell Discontinuous Transmission (DTX) and/or a cell Discontinuous Reception (DRX).

The energy-saving method provided by the embodiment of the present disclosure includes a following operation.

A terminal receives third configuration information sent by a network device, where the third configuration information is for configuring a measurement resource corresponding to a cell being in an active state and/or a measurement resource corresponding to the cell being in a deactivated state.

The energy-saving method provided by the embodiment of the present disclosure includes a following operation.

A terminal receives fourth configuration information sent by a network device, where the fourth configuration information is for configuring an association relationship between serving cells, and a serving cell having the association relationship with another serving cell is able to borrow a Synchronization Signal Block (SSB)-related measurement result of the another serving cell.

The energy-saving method provided by the embodiment of the present disclosure includes a following operation.

A network device sends first configuration information to a terminal, where the first configuration information is for configuring a cell DTX and/or a cell DRX.

The energy-saving method provided by the embodiment of the present disclosure includes a following operation.

A network device sends third configuration information to a terminal, where the third configuration information is for configuring a measurement resource corresponding to a cell being in an active state and/or a measurement resource corresponding to the cell being in a deactivated state.

The energy-saving method provided by the embodiment of the present disclosure includes a following operation.

A network device sends fourth configuration information to a terminal, where the fourth configuration information is for configuring an association relationship between serving cells, and a serving cell having the association relationship with another serving cell is able to borrow an SSB-related measurement result of the another serving cell.

The energy-saving device provided by the embodiment of the present disclosure is applied to a terminal, and the device includes a receiving unit.

The receiving unit is configured to receive first configuration information sent by a network device, where the first configuration information is for configuring a cell DTX and/or a cell DRX.

The energy-saving device provided by the embodiment of the present disclosure is applied to a terminal, and the device includes a receiving unit.

The receiving unit is configured to receive third configuration information sent by a network device, where the third configuration information is for configuring a measurement resource corresponding to a cell being in an active state and/or a measurement resource corresponding to the cell being in a deactivated state.

The energy-saving device provided by the embodiment of the present disclosure is applied to a terminal, and the device includes a receiving unit.

The receiving unit is configured to receive fourth configuration information sent by a network device, where the fourth configuration information is for configuring an association relationship between serving cells, and a serving cell having the association relationship with another serving cell is able to borrow an SSB-related measurement result of the another serving cell.

The energy-saving device provided by the embodiment of the present disclosure is applied to a network device, and the device includes a sending unit.

The sending unit is configured to send first configuration information to a terminal, where the first configuration information is for configuring a cell DTX and/or a cell DRX.

The energy-saving device provided by the embodiment of the present disclosure is applied to a network device, and the device includes a sending unit.

The sending unit is configured to send third configuration information to a terminal, where the third configuration information is for configuring a measurement resource corresponding to a cell being in an active state and/or a measurement resource corresponding to the cell being in a deactivated state.

The energy-saving device provided by the embodiment of the present disclosure is applied to a network device, and the device includes a sending unit.

The sending unit is configured to send fourth configuration information to a terminal, where the fourth configuration information is for configuring an association relationship between serving cells, and a serving cell having the association relationship with another serving cell is able to borrow an SSB-related measurement result of the another serving cell.

The terminal provided by the embodiment of the present disclosure includes a processor and a memory. The memory is configured to store a computer program, and the processor is configured to invoke and execute the computer program stored in the memory to cause the terminal to perform the above-described energy-saving method.

The network device provided by the embodiment of the present disclosure includes a processor and a memory. The memory is configured to store a computer program, and the processor is configured to invoke and execute the computer program stored in the memory to cause the terminal to perform the above-described energy-saving method.

The chip provided by the embodiment of the present disclosure is configured to implement the above-described energy-saving method.

Specifically, the chip includes a processor configured to invoke and execute a computer program from a memory, to cause the device on which the chip is mounted to perform the above-described energy-saving method.

The computer-readable storage medium provided by the embodiment of the present disclosure is configured to store a computer program causing a computer to perform the above-described energy-saving method.

The computer program product provided by the embodiment of the present disclosure includes computer program instructions causing a computer to perform the above-described energy-saving method.

The computer program provided by the embodiment of the present disclosure causes a computer to perform the above-described energy-saving method when the computer program is executed on the computer.

Through the above technical schemes, a cell DTX mechanism and/or a cell DRX mechanism is introduced, so that the cell is able to save energy effectively, and a purpose of dynamic network energy saving is realized.

### BRIEF DESCRIPTION OF THE DRAWINGS

The drawings described herein are used to provide a further understanding of the present disclosure and form a part of the present disclosure. The schematic embodiments of the application and the description thereof are used to explain the present disclosure and do not constitute an improper limitation of the present disclosure. In the drawings:
FIG. 1 is a schematic diagram of an application scenario to which an embodiment of the present disclosure is applied;
FIG. 2 is a first schematic flowchart of an energy-saving method according to an embodiment of the present disclosure;
FIG. 3-1 is a first schematic diagram of a DTX mechanism according to an embodiment of the present disclosure;
FIG. 3-2 is a second schematic diagram of a DTX mechanism according to an embodiment of the present disclosure;
FIG. 4 is a second schematic flowchart of an energy-saving method according to an embodiment of the present disclosure;
FIG. 5 is a third schematic flowchart of an energy-saving method according to an embodiment of the present disclosure;
FIG. 6 is a first schematic structural diagram of an energy-saving device according to an embodiment of the present disclosure;
FIG. 7 is a second schematic structural diagram of an energy-saving device according to an embodiment of the present disclosure;
FIG. 8 is a third schematic structural diagram of an energy-saving device according to an embodiment of the present disclosure;
FIG. 9 is a fourth schematic structural diagram of an energy-saving device according to an embodiment of the present disclosure;
FIG. 10 is a fifth schematic structural diagram of an energy-saving device according to an embodiment of the present disclosure;
FIG. 11 is a sixth schematic structural diagram of an energy-saving device according to an embodiment of the present disclosure;
FIG. 12 is a schematic structural diagram of a communication device according to an embodiment of the present disclosure;
FIG. 13 is a schematic structural diagram of a chip according to an embodiment of the present disclosure; and
FIG. 14 is a schematic block diagram of a communication system according to an embodiment of the present disclosure.

### DETAILED DESCRIPTION

The technical schemes in the embodiments of the present disclosure will be described below in conjunction with the drawings in the embodiments of the present disclosure. It is apparent that the described embodiments are a part of the embodiments of the present disclosure, not all of the embodiments. Based on the embodiments in the present disclosure, all other embodiments obtained by those skilled in the art without creative effort belong to the protection scope of the present disclosure.

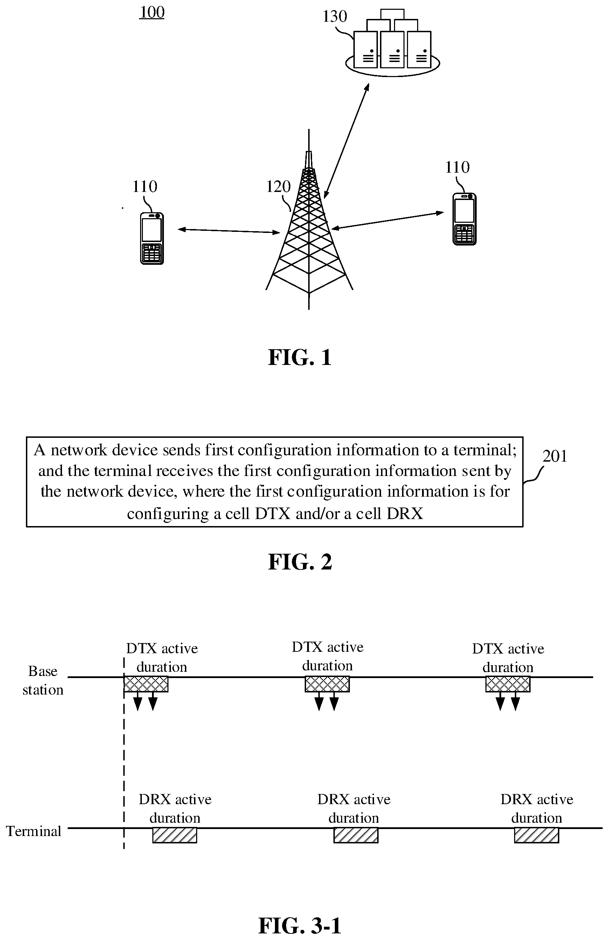

FIG. 1 is a schematic diagram of an application scenario to which an embodiment of the present disclosure is applied.

As shown in FIG. 1, a communication system 100 may include a terminal 110 and a network device 120. The network device 120 may communicate with the terminal 110 through an air interface. Multi-service transmission is supported between the terminal 110 and the network device 120.

It is to be understood that the embodiments of the present disclosure are only illustrative with the communication system 100 but are not limited thereto. That is to say, the technical schemes of the embodiments of the present disclosure may be applied to various communication systems, such as: a Long Term Evolution (LTE) system, a LTE Time Division Duplex (TDD), an Universal Mobile Telecommunications System (UMTS), an Internet of Things (IoT) system, a Narrow Band Internet of Things (NB-IoT) system, an Enhanced Machine-Type Communications (eMTC) system, a 5G communication system (also referred to as a New Radio (NR) communication system), or a future communication system, etc.

In the communication system 100 shown in FIG. 1, the network device 120 may be an access network device that communicates with the terminal 110. The access network device may provide communication coverage for a particular geographic area and may communicate with a terminal 110 (e.g., User equipment (UE)) located within the coverage.

The network device 120 may be an Evolved Node B (also called as eNB or eNodeB) in the LTE system, or a Next Generation Radio Access Network (NG RAN) device, or a base station (gNB) in the NR system, or a wireless controller in a Cloud Radio Access Network (CRAN), or the network device 120 may be a relay station, an access point, a vehicle-mounted device, a wearable device, a hub, a switch, a bridge, a router, or a network device in a future evolved Public Land Mobile Network (PLMN), etc.

The terminal 110 may be any terminal including, but not limited to, a terminal in wired or wireless connection with the network device 120 or other terminals.

For example, the terminal 110 may be an access terminal, a UE, a subscriber unit, a subscriber station, a mobile station, a remote station, a remote terminal, a mobile device, a user terminal, a terminal, a wireless communication device, a user agent, or a user device. The access terminal may be a cellular telephone, a cordless telephone, a Session Initiation Protocol (SIP) telephone, an IoT device, a satellite handheld terminal, a Wireless Local Loop (WLL) station, a Personal Digital Assistant (PDA), a handheld device having a wireless communication function, a computing device or other processing device connected to a wireless modem, a vehicle-mounted device, a wearable device, a terminal in a 5G network or a terminal in a future evolution network, etc.

The terminal 110 may be used for Device to Device (D2D) communication.

The wireless communication system 100 may also include a core network device 130 that communicates with the base station. The core network device 130 may be a 5G Core (5GC) device, for example, an Access And Mobility Management Function (AMF), for another example, an Authentication Server Function (AUSF), for another example, a User Plane Function (UPF), and for another example, a Session Management Function (SMF). Optionally, the core network device 130 may also be an Evolved Packet Core (EPC) device of the LTE network, for example, a Session Management Function + Core Packet Gateway (SMF+PGW-C) device. It is to be understood that SMF+PGW-C device may implement the functions implemented by the SMF and PGW-C. In a process of network evolution, the core network device may also be called by other names, or a new network entity may be formed by partitioning the functions of the core network, which is not limited in the embodiments of the present disclosure.

The communication between the functional units of the communication system 100 may be implemented by establishing a connection through a next generation (NG) interface.

For example, the terminal establishes an air interface connection with the access network device through an NR interface, to transmit user plane data and control plane signaling. The terminal may establish a control plane signaling connection with an AMF through an NG interface 1 (abbreviated as N1). The access network device, such as the gNB, may establish a user plane data connection with a UPF through an NG interface 3 (abbreviated as N3). The access network device may establish control plane signaling connection with the AMF through an NG interface 2 (abbreviated as N2). The UPF may establish the control plane signaling connection with an SMF through an NG interface 4 (abbreviated as N4). The UPF may exchange user plane data with a data network through an NG interface 6 (abbreviated as N6). The AMF may establish the control plane signaling connection with the SMF through an NG interface 11 (abbreviated as N11). The SMF may establish the control plane signaling connection with a PCF through an NG Interface 7 (abbreviated as N7).

FIG. 1 exemplarily illustrates one base station, one core network device and two terminals. Optionally, the wireless communication system 100 may include multiple base station devices and other numbers of the terminals may be included within the coverage of each base station, which is not limited in the embodiments of the present disclosure.

It is to be noted that FIG. 1 only illustrates by way of example the system to which the present disclosure applies and of course the method shown in the embodiment of the present disclosure may also be applied to other systems. In addition, the terms "system" and "network" herein are often used interchangeably herein. In this disclosure, the term "and/or" is only to describe an association relationship between associated objects and represents that three kinds of relationships may exist. For example, A and/or B may represent three conditions: i.e., independent existence of A, existence of both A and B and independent existence of B. In addition, the character "/" in the present disclosure generally indicates that the associated objects before and after this character is in an "or" relationship. It should be understood that the reference to "indication" in the embodiments of the present disclosure may be a direct indication, may be an indirect indication, or may be indicative of an association. For example, A indicates B, which may mean that A directly indicates B, for example, B may be obtained through A; it may also mean that A indirectly indicates B, for example, A indicates C, and B may be obtained by C; and it may also indicate that there is an association between A and B. It should also be understood that the term "correspondence" may mean that there is a direct correspondence or an indirect correspondence between the two, may also mean that there is an association relationship between the two, and may also be a relationship between indication and being indicated, configuration and being configured, etc. It should also be understood that "predefined" or "predefined rules" may be achieved by pre-storing corresponding codes, tables or other means used for indicating relevant information in devices (e.g., including terminals and network devices), and the present disclosure is not limited to the specific implementation thereof. For example, predefined may refer to what is defined in the protocol. It should also be understood that, in the embodiments of the present disclosure, the "protocol" may be a standard protocol in the communication field. For example, the protocol may include an LTE protocol, an NR protocol, and related protocols applied in future communication systems, which are not limited in the present disclosure.

Compared with the 4G network, the energy consumption of the 5G network has multiplied. For example, the 5G base station has a large bit rate and high speed, and thus has the power consumption being four times that of the 4G base station. The energy consumption of the base station brings huge network operation and maintenance costs to the network operation of the operators, and continues to increase. Therefore, the network energy saving is a major concern for operators in the network operation and maintenance.

In the mobile communication network, distribution of services varies depending on different time. For example, there will be fewer services at night, more services during the daytime, and even fewer services at midnight. Moreover, the distribution of services is also associated with a geographical area. For example, in an enterprise park, the number of users is relatively large during the daytime, but there are almost no users at night. However, in urban or residential areas, there are fewer services during working hours in the daytime, but there may be more services at night. Therefore, if network deployment in a certain area may be dynamically adjusted according to the change of the amount of the services, such as dynamically shutting down certain cells or hibernating certain cells, the purpose of network energy saving can be realized.

In the network deployment, in order to satisfy requirements of user mobility and throughput, coverage-type cells may be jointly deployed with capacity-type cells. The coverage-type cells are used to satisfy coverage requirements, and the capacity-type cells are used in urban areas with relatively large number of users, to share the services and improve capacity of the network. The capacity-type cells may be selectively turned off and turned on according to the amount of the services. If a capacity-type cell is turned off and turned on strictly according to the time period, the goal of the optimal network energy saving cannot be realized because the amount of the services is dynamic and random. Therefore, dynamically controlling the capacity-type cells is a better scheme for the network energy saving. In view of this, the following technical schemes according to the embodiments of the present disclosure are proposed. It is to be noted that the cells in the technical schemes of the embodiments of the present disclosure may be, but are not limited to, the capacity-type cells, and may be another type of cells, such as the coverage-type cells.

It is to be noted that the technical schemes of the embodiments of the present disclosure may be applied to, but are not limited to, 5G, 6G, and the like, and may also be applied to future mobile communication systems.

In order to facilitate understanding of the technical schemes of the embodiments of the present disclosure, the technical schemes of the present disclosure will be described in detail below with reference to specific embodiments. The above related technologies, as optional schemes, can be arbitrarily combined with the technical schemes of the embodiments of the present disclosure, all of which belong to the protection scope of the embodiments of the present disclosure. The embodiments of the present disclosure include at least some of following contents.

In the technical schemes of the embodiments of the present disclosure, an energy-saving state and a non-energy-saving state of the cell are introduced. The energy-saving state of the cell is: a state where the cell DTX and/or cell DRX is configured, or a state where the cell DTX and/or cell DRX is enabled, or a state where the cell DTX and/or cell DRX is valid, or a state where the cell DTX and/or cell DRX is performed. The non-energy-saving state of the cell is: a state where the cell DTX and/or cell DRX is not configured, or a state where the cell DTX and/or cell DRX is disabled, or a state where the cell DTX and/or cell DRX is invalid, or a state where the cell DTX and/or cell DRX is terminated.

It is to be noted that the energy-saving state and the non-energy-saving state of the cell may have other names, for example, a first state and a second state of the cell.

In the embodiment of the present disclosure, the cell DTX is: the network device sends downlink data and/or signals at periodic intervals in the cell, thereby realizing the purpose of the network energy saving. The cell DRX is: the network device receives the uplink data and/or signals at periodic intervals in the cell, thereby realizing the purpose of the network energy saving.

FIG. 2 is a first schematic flowchart of an energy-saving method according to an embodiment of the present disclosure. As shown in FIG. 2, the energy-saving method includes operation 201.

In operation 201, a network device sends first configuration information to a terminal; and the terminal receives the first configuration information sent by the network device, where the first configuration information is for configuring a cell DTX and/or a cell DRX.

In the embodiment of the present disclosure, the cell DTX may be classified into: 1) a cell DTX corresponding to a connected state (RRC_CONNECTED); and 2) a cell DTX corresponding to an idle state and/or an inactive state (RRC_IDLE and/or RRC_INACTIVE).

In some implementations, the cell DTX corresponding to the connected state is configured independently from the cell DTX corresponding to the idle state and/or inactive state; alternatively, the cell DTX corresponding to the connected state is configured collectively with the cell DTX corresponding to the idle state and/or inactive state.

For example, in the case of configuring independently, two sets of DTXs may be configured in the first configuration information, one set of DTXs is applied to the connected state, and the other set of DTXs is applied to the idle state and/or inactive state. In the case of configuring collectively, one set of DTXs is configured in the first configuration information, and the set of DTXs is applied to any RRC state, such as the connected state, the idle state and the inactive state.

In the embodiment of the present disclosure, the cell DRX may be classified into: 1) a cell DRX corresponding to a connected state (RRC_CONNECTED); and 2) a cell DRX corresponding to an idle state and/or an inactive state (RRC_IDLE and/or RRC_INACTIVE).

In some implementations, the cell DRX corresponding to the connected state is configured independently from the cell DRX corresponding to the idle state and/or inactive state; alternatively, the cell DRX corresponding to the connected state is configured collectively with the cell DRX corresponding to the idle state and/or inactive state.

For example, in the case of configuring independently, two sets of DRXs may be configured in the first configuration information, one set of DRXs is applied to the connected state, and the other set of DRXs is applied to the idle state and/or inactive state. In the case of configuring collectively, one set of DRXs is configured in the first configuration information, and the set of DRXs is applied to any RRC state, such as the connected state, the idle state and the inactive state.

In some implementations, the first configuration information is carried in Radio Resource Control (RRC) signaling; and/or the first configuration information is carried in a system broadcast message.

For example, for the connected state, the first configuration information is carried in the RRC signaling, and the terminal may acquire the first configuration information through the RRC signaling.

For example, for the idle state and/or inactive state, the first configuration information is carried in the system broadcast message (for example, SIB1), and the terminal may acquire the first configuration information through the system broadcast message.

Hereinafter, schemes related to the cell DTX and the cell DRX will be described in detail.

### Scheme 1: cell DTX

In some implementations, the first configuration information includes at least one of:
first information for determining a DTX period of a cell;
second information for determining a start time of the cell DTX; or
third information for determining a time length of the cell DTX.

Herein, the second information may be a DTX start offset, and the start time of the DTX may be determined according to the DTX start offset and the DTX period. The start time of the DTX is a start time of the DTX period.

Herein, the time length of the DTX is a time length of the DTX active duration.

Herein, the first configuration information is for determining a cell DTX active duration and a cell DTX inactive duration.

The DTX has periodicity, and one DTX period consists of a DTX active duration and a DTX inactive duration. The DTX active duration is an early period of time in the DTX period. It is to be understood that the DTX active duration is also periodic, and the DTX inactive duration is also periodic.

The "DTX active duration" may also be described as "DTX duration", "DTX ON", "DTX wake-up duration", etc. The "DTX inactive duration" may also be described as "DTX OFF" or "DTX dormancy duration", etc.

In the embodiment of the present disclosure, the cell DTX active duration has a following characteristic: the network device is able to send downlink data and/or signals during the cell DTX active duration; and the cell DTX inactive duration has a following characteristic: the network device is unable to send the downlink data and/or the signals during the cell DTX inactive duration.

In some implementations, the first configuration information further includes a first timer, an operating duration of the first timer is in the cell DTX active duration; and starting of the first timer is triggered based on a following condition: the network device sends the downlink data and/or the signals during the cell DTX active duration.

In an example, as shown in FIG. 3-1, for the DTX, the DTX active duration and the DTX inactive duration depend entirely on the DTX period, the start time of the DTX and the time length of the DTX, which are configured by the network device.

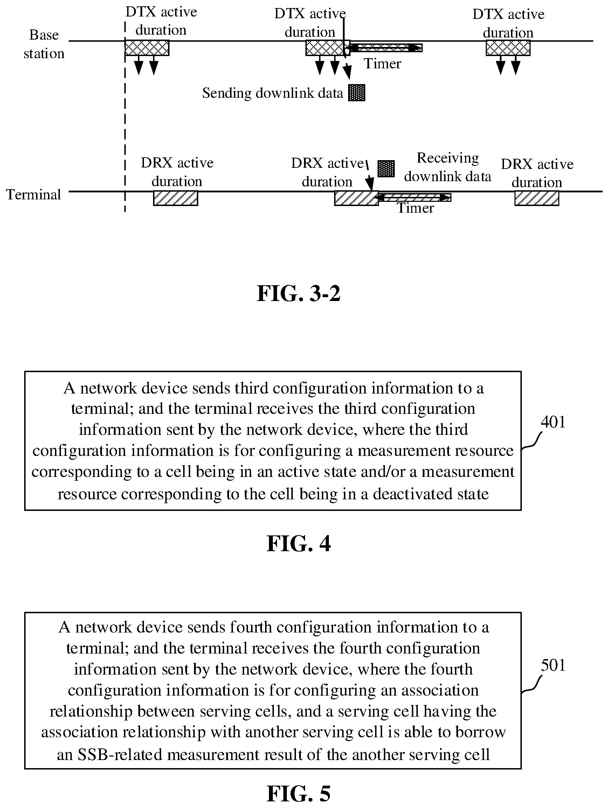

In an example, as shown in FIG. 3-2, for the DTX, initial states of the DTX active duration and the DTX inactive duration depend on the DTX period, the start time of the DTX and the time length of the DTX, which are configured by the network device. When the network device sends data and/or a signal in the DTX active duration, a first timer is started. The first timer is configured to extend the DTX active duration, and the operating duration of the first timer belongs to the DTX active duration. Thereafter, the first timer is started or restarted whenever the network device sends the data and/or the signal in the DTX active duration.

### Case 1: terminal in the connected state

For the terminal in the connected state, the terminal does not monitor the Physical Downlink Control Channel (PDCCH) in a case where the cell is in the DTX inactive duration. In some implementations, the terminal does not stop the DRX timer in the case where the cell is in the DTX inactive duration. In other embodiments, the terminal stops the DRX timer in the case where the cell is in the DTX inactive duration. Herein, the operating duration of the DRX timer, such as *drx-onDurationTimer, drx-InactivityTimer, drx-RetransmissionTimerDL, drx-RetransmissionTimerUL,* belongs to the DRX active duration of the terminal side.

For the terminal in the connected state, the terminal monitors the PDCCH in a case where the cell is in the DTX active duration and the terminal is in the DRX active duration.

In an example, for the terminal-side DRX, the terminal-side DRX operation runs normally. When the terminal evaluates and finds that the cell is in the DRX inactive duration, the terminal does not stop any terminal-side DRX timer, but stops monitoring the PDCCH. The terminal monitors the PDCCH if and only if the terminal is in the DRX active duration and the cell is in the DRX active duration.

In an example, for the terminal-side DRX, the terminal-side DRX operation runs normally. When the terminal evaluates and finds that the cell is in the DRX inactive duration, the terminal stops the DRX timer and of course stops monitoring the PDCCH. When the terminal evaluates and finds that the cell is in the DRX active duration, the terminal continues to run the DRX timer or restarts the DRX timer. The terminal monitors the PDCCH if and only if the terminal is in the DRX active duration and the cell is in the DRX active duration.

In some implementations, the network device sends second configuration information to the terminal, and the terminal receives the second configuration information sent by the network device. The second configuration information is for configuring a first DRX and a second DRX of the terminal, the first DRX is associated with an energy-saving state of the cell, and the second DRX is associated with a non-energy-saving state of the cell.

In some implementations, the network device sends a first command to the terminal; and the terminal receives the first command sent by the network device and activates the first DRX of the terminal based on the first command. Herein, the first command is for indicating at least one of: the cell enters the energy-saving state, the cell DTX is activated, or activation of the first DRX of the terminal.

In some implementations, the network device sends a second command to the terminal; and the terminal receives the second command sent by the network device and activates the second DRX of the terminal based on the second command. The second command is for indicating at least one of: the cell enters the non-energy-saving state, the cell DTX is deactivated, or activation of the second DRX of the terminal.

In an example, for the terminal, the DRX configuration principle for the terminal is: the start points of the DRXs (i.e., the start times of the DRXs) of all terminals cannot be configured to be overly concentrated, otherwise a scheduling load will be unbalanced, and resources will be wasted and a service delay will increase. The usage of the cell DTX requires that the start points of the DRXs of all terminals are aligned as much as possible, so as to maximize the DTX gain. In order to balance the DRX configuration principle for the terminal and the DTX gain, the terminal may be configured with two DRXs, and if the Network Energy Saving (NES) states of the cell are different, the terminal uses different DRXs. For example, when there are a large amount of services, the positions of the DRX active durations of all terminals are discretized to implement the balanced service scheduling; and when there are fewer services, the positions of the DRX active durations of the terminals are centralized, so as to be adapted to the cell DTXs to realize the network energy saving. The handover between different DRXs may be based on an explicit command or an implicit command from the network device. For example, the implicit command may be an indication of cell energy-saving state, and when it is indicated that the cell enters the energy-saving state, the terminal activates the first DRX; and when it is indicated that the cell enters the non-energy-saving state, the terminal activates the second DRX.

### Case 2: terminal in the idle state and/or the inactive state

The terminal in the idle state and/or the inactive state may receive system broadcast messages, such as, the Master Information Block (MIB), the System Information Block 1 (SIB1), and Other System Information (OSI). The OSI refers to the SIB2 and the subsequent SIBs. The MIB is in the SSB. The MIB and SIB1 cannot be requested, and the SIB2 and subsequent SIBs may be sent based on a request. Therefore, only the transmissions of the MIB and the SIB1 need to be considered for the cell DTX. In the NR, the transmission period of the MIB is 80 ms, and the transmission period of the SIB1 is 160 ms.

In some implementations, when the cell DTX is configured, for example, when the DRX period of the cell and the time length of the cell DRX, it is necessary to ensure that the transmission position of the MIB and/or the SIB1 is within the cell DTX active duration. In this way, a legacy terminal may normally receive the MIB and/or SIB1 in the cell DTX active duration, which is not affected by the energy-saving state of the cell.

In some implementations, the terminal sends a first request message to the network device; and the network device receives the first request message sent by the terminal. The first request message is for requesting system information, and the first request message is further for triggering the cell to enter the non-energy-saving state.

In some implementations, after entering the non-energy-saving state, the cell enters the energy-saving state after a second timer expires or a first counter reaches a maximum value.

Herein, the first counter counts based on a granularity of a first period, and the first period is the DTX period, a transmission period of an MIB, a transmission period of an SIB1, or a transmission period of the requested system information.

Herein, a duration of the second timer or the maximum value of the first counter is configured by a system broadcast message.

In an example, when the terminal requests the OSI, there may be following three options. In option 1), the cell enters the non-energy-saving state; and the network device may send the second command to the terminal or not send the second command to the terminal, where the second command is for indicating at least one of the following: the cell enters the non-energy-saving state, or the cell DTX is deactivated. In option 2), the network device only sends the requested system broadcast information, regardless of whether the network device is in the energy-saving state or the non-energy-saving state. In option 3), the cell enters the non-energy-saving state, and further, implicitly enters the energy-saving state. For example, the network device enters the energy-saving state again through the control by the timer or the counter. For example, the terminal requests the OSI, which implicitly triggers the cell to enter the non-energy-saving state; and the network device starts the timer or counter, and the cell enters the energy-saving state again when the timer expires or the counter reaches the maximum value. The counter may count based on a granularity of DTX period, the transmission period of the MIB, the transmission period of the SIB1, or the transmission period of the requested system information. The maximum value of the counter depends on the configuration by the system broadcast message.

In some implementations, the network device sends a paging message on a paging occasion within the cell DTX active duration; and the terminal receives the paging message on the paging occasion. The paging message is sent by the network device on the paging occasion within the cell DTX active duration.

Herein, the network device sends the paging message on the paging occasion within the cell DTX active duration. Both the legacy terminal and an NES terminal may receive the paging message in a normal manner. There may be a delay in sending the paging message by the network device due to the DTX.

In some implementations, the first configuration information is for configuring multiple cell DTXs, and each DTX is associated with a terminal group or a service group.

In some implementations, the terminal determines a cell DTX corresponding to the terminal based on a terminal group or a service group to which the terminal belongs.

In an example, considering that the future services are diverse and different services has different periods, the DRXs of all terminals are difficult to be aligned. Therefore, the terminals may be grouped (may be grouped according to the service type), the DRXs of the terminals in a same group are aligned or roughly aligned, and each group may correspond to one cell DTX. The network device may configure multiple DTXs for the terminal, and each DTX is associated with one group (such as the terminal group or the service group); and configure a group identifier (such as the Group Radio Network Temporary Identifier (G-RNTI)) for each DTX, and each group identifier corresponds to one cell DTX. In this way, a terminal may determine the cell DTX corresponding to the terminal according to the group to which the terminal belongs. Herein, different services may also be associated with one DTX, for example, the Logical Channel Identifier (LCID) list may be associated with one DTX.

### Scheme 2: cell DRX

In some implementations, the first configuration information includes at least one of:
fourth information for determining a DRX period of a cell;
fifth information for determining a start time of the cell DRX; or
sixth information for determining a time length of the cell DRX.

Herein, the fifth information may be a DRX start offset, and the start time of the DRX may be determined according to the DRX start offset and the DRX period. The start time of the DRX is a start time of the DRX period.

Herein, the time length of the DRX is a time length of the DRX active duration.

Herein, the first configuration information is for determining a cell DRX active duration and a cell DRX inactive duration.

The DRX has periodicity, and one DRX period consists of a DRX active duration and a DRX inactive duration. The DRX active duration is an early period of time in the DRX period. It is to be understood that the DRX active duration is also periodic, and the DRX inactive duration is also periodic.

The "DRX active duration" may also be described as "DRX duration", "DRX ON", "DRX wake-up duration", etc. The "DRX inactive duration" may also be described as "DRX OFF" or "DRX dormancy duration", etc.

In the embodiment of the present disclosure, the cell DRX active duration has a following characteristic: the network device is able to receive uplink data and/or signals during the cell DRX active duration; and the cell DRX inactive duration has a following characteristic: the network device is unable to receive the uplink data and/or the signals during the cell DRX inactive duration.

### Case 1: terminal in the connected state

For the terminal in the connected state, the terminal does not perform a corresponding uplink transmission on an uplink resource within the cell DRX inactive duration; and/or the terminal performs the corresponding uplink transmission on the uplink resource within the cell DRX active duration.

In some implementations, the uplink resource includes at least one of: a Sounding Reference Signal (SRS) resource, a Configured Grant (CG) resource, a Physical Uplink Control Channel (PUCCH) resource, or an uplink scheduling resource.

In some implementations, after the terminal does not perform the corresponding uplink transmission, the terminal waits until the arrival of the cell DTX active duration, and then performs the corresponding uplink transmission on the uplink resource within the cell DRX active duration.

In an example, the uplink resources such as the uplink scheduling resource, the CG resource, the SRS resource and the PUCCH resource may depend on the configuration and implementation of the network device to enable the positions of these uplink resources to be within the cell DRX active duration, thereby achieving an expected DRX gain on the network side. If the positions of the pre-configured SRS resources and the CG resources cannot satisfy the requirement that all of them are located within the cell DRX active duration, the terminal does not perform the transmission (or remains mute to refrain from the transmission, or cancels the transmission) of the SRSs and CG PUSCHs on the SRS resources and the CG resources located within the DRX cell inactive duration. If the configured PUCCH resources cannot satisfy the requirement that all of them are located within the cell DRX active duration, the terminal does not send the PUCCHs on the PUCCH resources located within the cell DRX inactive duration; and furthermore, optionally, the terminal may delay the transmission, and may send the PUCCH on the latest PUCCH resource after the cell DRX active duration arrives. Alternatively, the transmission of the PUCCH may not be affected by the cell DRX, and the terminal may directly send the PUCCH on the PUCCH resource.

### Case 2: terminal in the idle state and/or the inactive state

The terminal in the idle state and/or the inactive state may initiate a random access procedure, i.e., send a preamble on a Random Access Channel Occasion (RO).

In some implementations, a transmission position of an RO is located within the cell DRX active duration; or an RO located within the cell DRX active duration is a valid RO.

In some implementations, the terminal selects the RO within the cell DRX active duration to initiate a random access procedure. The random access procedure is for triggering the cell to enter the non-energy-saving state. The network device receives the preamble on the RO within the cell DRX active duration, and triggers the cell to enter the non-energy-saving state.

In some implementations, after entering the non-energy-saving state, the cell enters the energy-saving state after a third timer expires or a second counter reaches a maximum value.

Herein, the second counter counts based on a granularity of a second period, and the second period is the DTX period or an RO period.

Herein, a duration of the third timer or the maximum value of the second counter is configured by the system broadcast message.

In an example, the network device configures an RO for the terminal, and a position of the RO is configured within the cell DRX active duration. Alternatively, the position of the RO configured by the network device is not limited, and an RO located outside the cell DRX active duration is considered as an invalid RO. The terminal selects the RO within the cell DRX active duration to initiate the random access procedure. After the terminal sends the preamble on the RO, i.e., after the network device receives the preamble on the RO, there are following two options. In option 1), the cell enters the non-energy-saving state; and the network device may send the second command to the terminal or not send the second command to the terminal, and the second command is for indicating at least one of the following: the cell enters the non-energy-saving state, or the cell DTX is deactivated. In option 2), the cell enters the non-energy-saving state, and further, implicitly enters the energy-saving state. For example, the network device enters the energy-saving state again through the control by the timer or the counter. For example, the terminal sends the preamble on the RO, and the network device starts a timer or a counter after receiving the preamble on the RO. If the timer expires or the counter reaches the maximum value, the cell enters the energy-saving state again. The counter may count based on a granularity of the DTX period or the RO period. The maximum value of the counter depends on the configuration by the system broadcast message.

### Scheme 3: mobility enhancement

In some implementations, the network device configures a first parameter for the terminal. The first parameter is for the terminal to perform cell selection and/or reselection, and the first parameter is set based on a terminal type and/or a service type. The terminal performs the cell selection and/or reselection based on the first parameter, and the first parameter is set based on a terminal type and/or a service type.

In some implementations, the first parameter includes at least one of: a parameter 'cell barred', an exclusion list of intra-frequency cells, an exclusion list of inter-frequency cells, or a parameter of the cell selection and/or reselection.

In some implementations, the network device determines a target cell corresponding to cell handover based on the terminal type and/or the service type. The terminal performs the cell handover, and the target cell corresponding to the cell handover is determined based on the terminal type and/or the service type.

In an example, it is considered that the types of terminals are complex and diverse, in particular, there will be more and more IoT terminals. Some cells in the energy-saving state may not be suitable for high-speed and low-latency types of services to occur, but the cells in the energy-saving state may still support the latency-insensitive and low-speed terminals, especially the IoT terminals. Therefore, for the cell selection and/or reselection, the cell in the energy-saving state may allow certain types of terminals, such as the IoT terminals, to reside. In view of this, it is necessary to enhance the parameters related to cell selection and/or reselection. Specifically, the parameters are set according to the terminal type and/or the service type. For example, the parameter 'cell barred' is set to have different values for different terminal types, i.e., the parameter 'cell barred' is associated with an applied terminal type or service type. For another example, an exclusion list (also referred to as a black list) of a frequency is set for different terminal types. Specifically, the inter-frequency exclusion list or the intra-frequency exclusion list of the frequency is set separately for different terminal types, i.e., the inter-frequency exclusion list or intra-frequency exclusion list is associated with an applied terminal type or service type. For another example, the parameters of the cell selection and/or reselection are set to have different values according to different terminal types or service types. The parameters of the cell selection and/or reselection include, such as, parameter(s) related to the R criterion, and cell-level cell reselection parameters, such as an offset, etc. Similarly, for the handover of the terminal in the connected state, the selective handover needs to be performed based on the terminal type. The network side acquires the terminal type and/or service type; the nodes at the network side interact, with each other, a terminal type and/or service type supported by each of the nodes; and the original base station determines a target cell to be switched according to the terminal type and/or service type and a measurement result reported by the terminal.

In some implementations, for the terminals that continue residing in the cell in the energy-saving state, the residence and service reception may be centrally performed on a BWP within one frequency spectrum range, for example, the BWP may be an initial BWP.

It is to be noted that the scheme 3 may be implemented independently or in arbitrary combination with another schemes.

FIG. 4 is a second schematic flowchart of an energy-saving method according to an embodiment of the present disclosure. As shown in FIG. 4, the energy-saving method includes operation 401.

In operation 401, a network device sends third configuration information to a terminal; and the terminal receives the third configuration information sent by the network device, where the third configuration information is for configuring a measurement resource corresponding to a cell being in an active state and/or a measurement resource corresponding to the cell being in a deactivated state.

In the embodiment of the present disclosure, the cell may be referred to as a Serving Cell (SCell). When the cell is in the active state, its measurement demand is large; and when the cell is in the deactivated state, its measurement demand is small. Therefore, the relaxed measurement is performed on the cell, so as to realize the purpose of energy saving. The scheme of the measurement relaxation will be described below.

### Scheme A

In some implementations, the third configuration information is for configuring a first measurement resource and a second measurement resource, the first measurement resource is associated with the active state of the cell, and the second measurement resource is associated with the deactivated state of the cell.

Herein, the measurement resource may be a Radio Resource Management (RRM) resource or a measurement object (MO).

In some implementations, in a case where the cell is in the deactivated state, the first measurement resource is in the deactivated state and/or the second measurement resource is in the active state; or in a case where the cell is in the active state, the second measurement resource is in the deactivated state and/or the first measurement resource is in the active state.

In some implementations, in the case where the cell is in the deactivated state, the terminal performs measurement based on the second measurement resource; or in the case where the cell is in the active state, terminal performs the measurement based on the first measurement resource.

In an example, the network device configures two sets of RRM resources or two MOs for the terminal, and the two sets of measurement resources are measurement resources when the SCell is in the active state and measurement resources when the SCell is in the deactivated state, respectively. The measurement resource (such as, a measurement resource 1) associated with the active state of the SCell is deactivated after the deactivation of the SCell, i.e., the network device does not perform transmission on the measurement resource 1. The measurement resource (such as, a measurement resource 2) associated with the deactivated state of the SCell is deactivated after the activation of the SCell, i.e., the network device does not perform the transmission on the measurement resource 2.

### Scheme B

In some implementations, the third configuration information is for configuring a measurement window, and a measurement resource within the measurement window is associated with the deactivated state of the cell.

In some implementations, in the case where the cell is in the deactivated state, the terminal performs measurement on the measurement resource within the measurement window.

In some implementations, the third configuration information includes at least one of:
seventh information for determining a period of the measurement window;
eighth information for determining a start time of the measurement window; or
ninth information for determining a duration of the measurement window.

In an example, after the deactivation of the SCell, the network device cancels the transmission on certain measurement resources based on existing measurement resources. How to cancel the transmission on certain measurement resources may be specified in the protocol so as to be consistent with the understanding by the terminal, or may be configured for the terminal by the network device. For example, the network device configures a periodic window (called measurement window), and the terminal will only measure the measurement resources appearing in the window. The window may be an SSB Measurement Timing Configuration (SMTC) window or may be different from the SMTC window.

### Scheme C

In some implementations, the third configuration information includes a first bitmap, each bit in the first bitmap corresponds to a periodic measurement resource, and a value of the bit indicates whether a measurement resource corresponding to the bit is used for measurement when the cell is in the deactivated state.

In an example, after the deactivation of the SCell, the network device cancels the transmission on certain measurement resources based on existing measurement resources. How to cancel the transmission on certain measurement resources may be specified in the protocol so as to be consistent with the understanding by the terminal, or may be configured for the terminal by the network device. For example, the network device indicates, in one period through the bitmap, a measurement resource on which the transmission is to be performed and a measurement resource on which the transmission is not to be performed, where each bit in the first bitmap corresponds to a periodic measurement resource.

### Scheme D

In some implementations, the third configuration information includes a first pattern, and the first pattern is a pattern of a measurement resource used for measurement when the cell is in the deactivated state.

In an example, after the deactivation of the SCell, the network device cancels the transmission on certain measurement resources based on existing measurement resources. How to cancel the transmission on certain measurement resources may be specified in the protocol so as to be consistent with the understanding by the terminal, or may be configured for the terminal by the network device. For example, the network device configures a comb pattern for indicating a measurement resource on which the transmission is to be performed and a measurement resource on which the transmission is not to be performed.

FIG. 5 is a third schematic flowchart of an energy-saving method according to an embodiment of the present disclosure. As shown in FIG. 5, the energy-saving method includes operation 501.

In operation 501, a network device sends fourth configuration information to a terminal; and the terminal receives the fourth configuration information sent by the network device, where the fourth configuration information is for configuring an association relationship between serving cells, and a serving cell having the association relationship with another serving cell is able to borrow an SSB-related measurement result of the another serving cell.

In some implementations, the network device sends a third command to the terminal; and the terminal receives the third command sent by the network device, where the third command is for adjusting the association relationship.

Herein, the third command is a Media Access Control (MAC) Control Element (CE) or Downlink Control Information (DCI).

In some implementations, the association relationship is configured between two inter-band serving cells; and/or the association relationship is configured between two intra-band serving cells.

In some implementations, in a case where the association relationship is configured between the two inter-band serving cells, a distance between frequency spectra corresponding to the two serving cells is less than or equal to a frequency spectrum distance threshold.

In some implementations, the terminal reports a first capability to the network device; and the network device receives the first capability reported by the terminal, where the first capability indicates at least one of: a combination of frequency bands supported by the terminal or a frequency spectrum distance threshold supported by the terminal.

In the above scheme, the SSB-related measurement result may include: an RRM measurement result, a time-frequency synchronization result, an Automatic Gain Control (AGC) setting result, a beam management result, a Radio Link Management (RLM) result, etc.

In the above scheme, in a case where one serving cell (referred to as the first serving cell) is able to borrow the SSB-related measurement result of another serving cell (referred to as the second serving cell), the first serving cell does not need to send the SSB. If the first serving cell and the second serving cell are in different frequency bands, the scheme may be referred to as an inter-band SCell without SSB. If the first serving cell and the second serving cell are in a same frequency band, then the scheme may be referred to as an intra-band SCell without SSB.

In an example, the network device may configure a borrowing and borrowed relationship (i.e., the above-described association relationship) between serving cells through RRC signaling. Furthermore, optionally, the network device may dynamically change this association relationship through the MAC CE or DCI. The network device may evaluate how far two frequency points in the inter-band are from each other so that the SSB-related measurement result can be borrowed. In view of this, a distance between the two serving cells in the frequency spectrum is required to be less than or equal to the frequency spectrum distance threshold. In addition, the terminal may report its capability, such as the combination of frequency bands supported by the terminal, the frequency spectrum distance threshold, etc. The capability is for assisting the network device to determine whether the inter-band SCell without SSB may be configured, or which cells may be configured with the inter-band SCell without SSB, or for assisting the network device to configure the association relationship.

Preferred embodiments of the present disclosure have been described in detail with reference to the accompanying drawings, but the present disclosure is not limited to the specific details of the above embodiments. Within the scope of the technical conception of the present disclosure, various simple modifications may be made to the technical scheme of the present disclosure, and these simple modifications all fall within the scope of protection of the present disclosure. For example, each of the specific technical features described in the above specific embodiments may be combined in any suitable manner without contradiction, and various possible combinations are not further described in this disclosure in order to avoid unnecessary repetition. For another example, any combination may be made between the various embodiments of the present disclosure so long as it does not depart from the idea of the present disclosure and is also to be regarded as the present disclosure of the present disclosure. For another example, on the premise of no conflict, each embodiment described in the present disclosure and/or the technical features in each embodiment may be arbitrarily combined with the prior art, and the technical scheme obtained after the combination should also fall within the scope of protection of the present disclosure.

It is to be understood that, in various embodiments of the present disclosure, the sequence numbers of the above processes do not imply the sequence of execution, and the sequence of execution of each process should be determined according to its functions and internal logic, and should not constitute any limitation on the implementation process of the embodiments of the present disclosure. Furthermore, in embodiments of the present disclosure, the terms "downlink", "uplink" and "sidelink" are used to represent the transmission direction of the signal or data, where the term "downlink" is used to represent a transmission direction of the signal or data as a first direction transmitted from a site to the user equipment of the cell, the term "uplink" is used to represent a transmission direction of the signal or data as a second direction transmitted from the user equipment of the cell to the site, and the term "sidelink" is used to represent a transmission direction of the signal or data as a first direction transmitted from the user equipment 1 to the user equipment 2. For example, a term "downlink signal" means that the transmission direction of the signal is a first direction. In addition, in embodiments of the present disclosure, the term "and/or" is only an association relationship describing associated objects and represents that three relationships may exist. For example, A and/or B may represent three conditions: i.e., independent existence of A, existence of both A and B and independent existence of B. In addition, the character "/" in the present disclosure generally indicates that the relationship between the associated objects is "or".

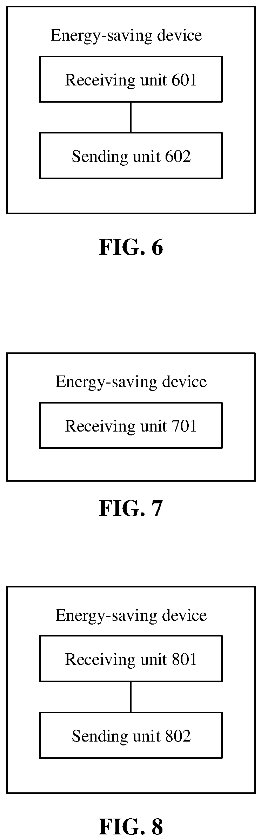

FIG. 6 is a schematic structural diagram of an energy-saving device according to an embodiment of the present disclosure. The energy-saving device is applied to a terminal. As shown in FIG. 6, the energy-saving device includes a receiving unit 601.

The receiving unit 601 is configured to receive first configuration information sent by a network device, where the first configuration information is for configuring a cell DTX and/or a cell DRX.

In some implementations, the first configuration information includes at least one of:
first information for determining a DTX period of a cell;
second information for determining a start time of the cell DTX; or
third information for determining a time length of the cell DTX.

In some implementations, the first configuration information is for determining a cell DTX active duration and a cell DTX inactive duration.

In some implementations, the cell DTX active duration has a following characteristic: the network device is able to send downlink data and/or signals during the cell DTX active duration; and the cell DTX inactive duration has a following characteristic: the network device is unable to send the downlink data and/or the signals during the cell DTX inactive duration.

In some implementations, the first configuration information further includes a first timer, an operating duration of the first timer is in the cell DTX active duration; and starting of the first timer is triggered based on a following condition:

the network device sends the downlink data and/or the signals during the cell DTX active duration.

In some implementations, the receiving unit 601 is configured to not monitor the PDCCH in the case where the cell is in the DTX inactive duration; or monitor the PDCCH in a case where the cell is in the DTX active duration and the terminal is in the DRX active duration.

In some implementations, the device further includes a controlling unit configured to: not stop the DRX timer in the case where the cell is in the DTX inactive duration; or stop the DRX timer in the case where the cell is in the DTX inactive duration.

In some implementations, the receiving unit 601 is configured to receive second configuration information sent by the network device, where the second configuration information is for configuring a first DRX and a second DRX of the terminal, the first DRX is associated with an energy-saving state of the cell, and the second DRX is associated with a non-energy-saving state of the cell.

In some implementations, the receiving unit 601 is configured to receive a first command sent by a network device, and activate the first DRX of the terminal based on the first command.

In some implementations, the first command is for indicating at least one of: the cell enters the energy-saving state, the cell DTX is activated, or activation of the first DRX of the terminal.

In some implementations, the receiving unit 601 is configured to receive a second command sent by the network device, and activate the second DRX of the terminal based on the second command.

In some implementations, the second command is for indicating at least one of: the cell enters the non-energy-saving state, the cell DTX is deactivated, or activation of the second DRX of the terminal.

In some implementations, the transmission position of the MIB and/or the SIB1 is within the cell DTX active duration.

In some implementations, the device further includes a sending unit 602, configured to send a first request message to the network device, where the first request message is for requesting system information, and the first request message is further for triggering the cell to enter a non-energy-saving state.

In some implementations, after the cell enters the non-energy-saving state, the cell enters an energy-saving state after a second timer expires or a first counter reaches a maximum value.

In some implementations, the first counter counts based on a granularity of a first period, and the first period is the DTX period, a transmission period of an MIB, a transmission period of an SIB1, or a transmission period of the requested system information.

In some implementations, a duration of the second timer or the maximum value of the first counter is configured by a system broadcast message.

In some implementations, the receiving unit 601 is configured to receive a paging message on a paging occasion, where the paging message is sent by the network device on the paging occasion within the cell DTX active duration.

In some implementations, the first configuration information includes at least one of:
fourth information for determining a DRX period of a cell;
fifth information for determining a start time of the cell DRX; or
sixth information for determining a time length of the cell DRX.

In some implementations, the first configuration information is for determining a cell DRX active duration and a cell DRX inactive duration.

In some implementations, the cell DRX active duration has a following characteristic: the network device is able to receive uplink data and/or signals during the cell DRX active duration; and the cell DRX inactive duration has a following characteristic: the network device is unable to receive the uplink data and/or the signals during the cell DRX inactive duration.

In some implementations, the sending unit 602 is configured to: not perform a corresponding uplink transmission on an uplink resource within the cell DRX inactive duration; and/or perform the corresponding uplink transmission on the uplink resource within the cell DRX active duration.

In some implementations, the uplink resource includes at least one of: an SRS resource, a CG resource, a PUCCH resource, or an uplink scheduling resource.

In some implementations, after the corresponding uplink transmission is not performed, the sending unit 602 is configured to perform, after waiting until arrival of the cell DTX active duration, the corresponding uplink transmission on the uplink resource within the cell DRX active duration.

In some implementations, a transmission position of an RO is located within the cell DRX active duration; or an RO located within the cell DRX active duration is a valid RO.

In some implementations, the sending unit 602 is configured to select the RO within the cell DRX active duration to initiate a random access procedure, where the random access procedure is for triggering the cell to enter the non-energy-saving state

In some implementations, after the cell enters the non-energy-saving state, the cell enters the energy-saving state after a third timer expires or a second counter reaches a maximum value.

In some implementations, the second counter counts based on a granularity of a second period, and the second period is the DTX period or an RO period.

In some implementations, a duration of the third timer or the maximum value of the second counter is configured by the system broadcast message.

In some implementations, the cell DTX corresponding to the connected state is configured independently from the cell DTX corresponding to the idle state and/or inactive state; alternatively, the cell DTX corresponding to the connected state is configured collectively with the cell DTX corresponding to the idle state and/or inactive state.

In some implementations, the cell DRX corresponding to the connected state is configured independently from the cell DRX corresponding to the idle state and/or inactive state; alternatively, the cell DRX corresponding to the connected state is configured collectively with the cell DRX corresponding to the idle state and/or inactive state.

In some implementations, the first configuration information is for configuring multiple cell DTXs, and each DTX is associated with a terminal group or a service group.

In some implementations, the device further includes a determining unit, configured to determine a cell DTX corresponding to the terminal based on a terminal group or a service group to which the terminal belongs.

In some implementations, the device further includes a cell selection and/or reselection unit, configured to perform cell selection and/or reselection based on a first parameter, where the first parameter is set based on a terminal type and/or a service type.

In some implementations, the first parameter includes at least one of: a parameter 'cell barred', an exclusion list of intra-frequency cells, an exclusion list of inter-frequency cells, or a parameter of the cell selection and/or reselection.

In some implementations, the device further includes a handover unit, configured to perform cell handover, where the target cell corresponding to the cell handover is determined based on the terminal type and/or the service type e.

In some implementations, the first configuration information is carried in RRC signaling; and/or the first configuration information is carried in a system broadcast message.

Those skilled in the art will appreciate that the above-described description of the energy-saving device in the embodiment of the present disclosure may be understood with reference to the description of the energy-saving method in the embodiment of the present disclosure.

FIG. 7 is a second schematic structural diagram of an energy-saving device according to an embodiment of the present disclosure. The energy-saving device is applied to a terminal. As shown in FIG. 7, the energy-saving device includes a receiving unit 701.

The receiving unit 701 is configured to receive third configuration information sent by a network device, where the third configuration information is for configuring a measurement resource corresponding to a cell being in an active state and/or a measurement resource corresponding to the cell being in a deactivated state.

In some implementations, the third configuration information is for configuring a first measurement resource and a second measurement resource, the first measurement resource is associated with the active state of the cell, and the second measurement resource is associated with the deactivated state of the cell.

In some implementations, in the case where the cell is in the deactivated state, the first measurement resource is in the deactivated state and/or the second measurement resource is in the active state; or in the case where the cell is in the active state, the second measurement resource is in the deactivated state and/or the first measurement resource is in the active state.

In some implementations, the receiving unit 701 is configured to perform measurement based on the second measurement resource in the case where the cell is in the deactivated state; or perform the measurement based on the first measurement resource in the case where the cell is in the active state.

In some implementations, the third configuration information is for configuring a measurement window, and a measurement resource within the measurement window is associated with the deactivated state of the cell.

In some implementations, the receiving unit 701 is configured to perform measurement on the measurement resource within the measurement window in the case where the cell is in the deactivated state.

In some implementations, the third configuration information includes at least one of:
seventh information for determining a period of the measurement window;
eighth information for determining a start time of the measurement window; or
ninth information for determining a duration of the measurement window.

In some implementations, the third configuration information includes a first bitmap, each bit in the first bitmap corresponds to a periodic measurement resource, and a value of the bit indicates whether a measurement resource corresponding to the bit is used for measurement when the cell is in the deactivated state.

In some implementations, the third configuration information includes a first pattern, and the first pattern is a pattern of a measurement resource used for measurement when the cell is in the deactivated state.

Those skilled in the art will appreciate that the above-described description of the energy-saving device in the embodiment of the present disclosure may be understood with reference to the description of the energy-saving method in the embodiment of the present disclosure.

FIG. 8 is a third schematic structural diagram of an energy-saving device according to an embodiment of the present disclosure. The energy-saving device is applied to a terminal. As shown in FIG. 8, the energy-saving device includes a receiving unit 801.

The receiving unit 801 is configured to receive fourth configuration information sent by a network device, where the fourth configuration information is for configuring an association relationship between serving cells, and a serving cell having the association relationship with another serving cell is able to borrow an SSB-related measurement result of the another serving cell.

In some implementations, the receiving unit 801 is configured to receive a third command sent by the network device, where the third command is for adjusting the association relationship.

In some implementations, the third command is a MAC CE or DCI.

In some implementations, the association relationship is configured between two inter-band serving cells; and/or the association relationship is configured between two intra-band serving cells.

In some implementations, in a case where the association relationship is configured between the two inter-band serving cells, a distance between frequency spectra corresponding to the two serving cells is less than or equal to a frequency spectrum distance threshold.

In some implementations, the device further includes a sending unit 802, configured to report a first capability to the network device, where the first capability indicates at least one of: a combination of frequency bands supported by the terminal or a frequency spectrum distance threshold supported by the terminal.

Those skilled in the art will appreciate that the above-described description of the energy-saving device in the embodiment of the present disclosure may be understood with reference to the description of the energy-saving method in the embodiment of the present disclosure.

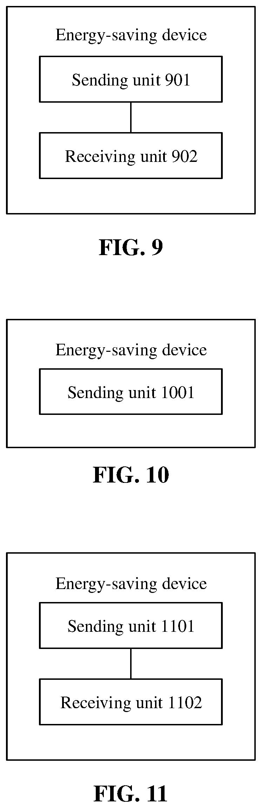

FIG. 9 is a fourth schematic structural diagram of an energy-saving device according to an embodiment of the present disclosure. The energy-saving device is applied to a network device. As shown in FIG. 9, the energy-saving device includes a sending unit 901.

The sending unit 901 is configured to send first configuration information to a terminal, where the first configuration information is for configuring a cell DTX and/or a cell DRX.

In some implementations, the first configuration information includes at least one of:
first information for determining a DTX period of a cell;
second information for determining a start time of the cell DTX; or
third information for determining a time length of the cell DTX.

In some implementations, the first configuration information is for determining a cell DTX active duration and a cell DTX inactive duration.

In some implementations, the cell DTX active duration has a following characteristic: the network device is able to send downlink data and/or signals during the cell DTX active duration; and the cell DTX inactive duration has a following characteristic: the network device is unable to send the downlink data and/or the signals during the cell DTX inactive duration.

In some implementations, the first configuration information further includes a first timer, an operating duration of the first timer is in the cell DTX active duration; and starting of the first timer is triggered based on a following condition:
the network device sends the downlink data and/or the signals during the cell DTX active duration.

In some implementations, the sending unit 901 is configured to send second configuration information to the terminal, where second configuration information is for configuring a first DRX and a second DRX of the terminal, the first DRX is associated with an energy-saving state of the cell, and the second DRX is associated with a non-energy-saving state of the cell.

In some implementations, the sending unit 901 is configured to send a first command to the terminal, where the first command is for indicating at least one of: the cell enters the energy-saving state, the cell DTX is activated, or activation of the first DRX of the terminal.

In some implementations, the sending unit 901 is configured to send a second command to the terminal, where the second command is for indicating at least one of: the cell enters the non-energy-saving state, the cell DTX is deactivated, or activation of the second DRX of the terminal.

In some implementations, the transmission position of the MIB and/or the SIB1 is within the cell DTX active duration.

In some implementations, the device further includes a receiving unit 902, configured to receive a first request message sent by the terminal, where the first request message is for requesting system information, and the first request message is further for triggering the cell to enter a non-energy-saving state.

In some implementations, after the cell enters the non-energy-saving state, the cell enters an energy-saving state after a second timer expires or a first counter reaches a maximum value.

In some implementations, the first counter counts based on a granularity of a first period, and the first period is the DTX period, a transmission period of an MIB, a transmission period of an SIB1, or a transmission period of the requested system information.

In some implementations, a duration of the second timer or the maximum value of the first counter is configured by a system broadcast message.

In some implementations, the sending unit 901 is configured to send a paging message on a paging occasion within the cell DTX active duration.

In some implementations, the first configuration information includes at least one of:
fourth information for determining a DRX period of a cell;
fifth information for determining a start time of the cell DRX; or
sixth information for determining a time length of the cell DRX.

In some implementations, the first configuration information is for determining a cell DRX active duration and a cell DRX inactive duration.

In some implementations, the cell DRX active duration has a following characteristic: the network device is able to receive uplink data and/or signals during the cell DRX active duration; and the cell DRX inactive duration has a following characteristic: the network device is unable to receive the uplink data and/or the signals during the cell DRX inactive duration.

In some implementations, a transmission position of an RO is located within the cell DRX active duration; or an RO located within the cell DRX active duration is a valid RO.

In some implementations, the receiving unit 902 is configured to receive a preamble on the RO within the cell DRX active duration, and triggers the cell to enter the non-energy-saving state.

In some implementations, after the cell enters the non-energy-saving state, the cell enters the energy-saving state after a third timer expires or a second counter reaches a maximum value.

In some implementations, the second counter counts based on a granularity of a second period, and the second period is the DTX period or an RO period.

In some implementations, a duration of the third timer or the maximum value of the second counter is configured by the system broadcast message.

In some implementations, the cell DTX corresponding to the connected state is configured independently from the cell DTX corresponding to the idle state and/or inactive state; alternatively, the cell DTX corresponding to the connected state is configured collectively with the cell DTX corresponding to the idle state and/or inactive state.

In some implementations, the cell DRX corresponding to the connected state is configured independently from the cell DRX corresponding to the idle state and/or inactive state; alternatively, the cell DRX corresponding to the connected state is configured collectively with the cell DRX corresponding to the idle state and/or inactive state.

In some implementations, the first configuration information is for configuring multiple cell DTXs, and each DTX is associated with a terminal group or a service group.

In some implementations, the device further includes a configuring unit, configured to configure a first parameter for the terminal. The first parameter is for the terminal to perform cell selection and/or reselection, and the first parameter is set based on a terminal type and/or a service type.

In some implementations, the first parameter includes at least one of: a parameter 'cell barred', an exclusion list of intra-frequency cells, an exclusion list of inter-frequency cells, or a parameter of the cell selection and/or reselection.

In some implementations, the device further includes a determining unit, configured to determine a target cell corresponding to cell handover based on the terminal type and/or the service type.

In some implementations, the first configuration information is carried in RRC signaling; and/or the first configuration information is carried in a system broadcast message.

Those skilled in the art will appreciate that the above-described description of the energy-saving device in the embodiment of the present disclosure may be understood with reference to the description of the energy-saving method in the embodiment of the present disclosure.

FIG. 10 is a fifth schematic structural diagram of an energy-saving device according to an embodiment of the present disclosure. The energy-saving device is applied to a network device. As shown in FIG. 10, the energy-saving device includes a sending unit 1001.

The sending unit 1001 is configured to send third configuration information to a terminal, where the third configuration information is for configuring a measurement resource corresponding to a cell being in an active state and/or a measurement resource corresponding to the cell being in a deactivated state.

In some implementations, the third configuration information is for configuring a first measurement resource and a second measurement resource, the first measurement resource is associated with the active state of the cell, and the second measurement resource is associated with the deactivated state of the cell.

In some implementations, in the case where the cell is in the deactivated state, the first measurement resource is in the deactivated state and/or the second measurement resource is in the active state; or in the case where the cell is in the active state, the second measurement resource is in the deactivated state and/or the first measurement resource is in the active state.

In some implementations, the third configuration information is for configuring a measurement window, and a measurement resource within the measurement window is associated with the deactivated state of the cell.

In some implementations, the third configuration information includes at least one of:
seventh information for determining a period of the measurement window;
ighth information for determining a start time of the measurement window; or
ninth information for determining a duration of the measurement window.

In some implementations, the third configuration information includes a first bitmap, each bit in the first bitmap corresponds to a periodic measurement resource, and a value of the bit indicates whether a measurement resource corresponding to the bit is used for measurement when the cell is in the deactivated state.

In some implementations, the third configuration information includes a first pattern, and the first pattern is a pattern of a measurement resource used for measurement when the cell is in the deactivated state.

Those skilled in the art will appreciate that the above-described description of the energy-saving device in the embodiment of the present disclosure may be understood with reference to the description of the energy-saving method in the embodiment of the present disclosure.

FIG. 11 is a sixth schematic structural diagram of an energy-saving device according to an embodiment of the present disclosure. The energy-saving device is applied to a network device. As shown in FIG. 11, the energy-saving device includes a sending unit 1101.

The sending unit 1101 is configured to send fourth configuration information to a terminal, where the fourth configuration information is for configuring an association relationship between serving cells, and a serving cell having the association relationship with another serving cell is able to borrow an SSB-related measurement result of the another serving cell.

In some implementations, the sending unit 1101 is configured to send a third command to the terminal, where the third command is for adjusting the association relationship.

In some implementations, the third command is a MAC CE or DCI.

In some implementations, the association relationship is configured between two inter-band serving cells; and/or the association relationship is configured between two intra-band serving cells.

In some implementations, in a case where the association relationship is configured between the two inter-band serving cells, a distance between frequency spectra corresponding to the two serving cells is less than or equal to a frequency spectrum distance threshold.

In some implementations, the device further includes a receiving unit 1102, configured to receive a first capability reported by the terminal, where the first capability indicates at least one of: a combination of frequency bands supported by the terminal or a frequency spectrum distance threshold supported by the terminal.

Those skilled in the art will appreciate that the above-described description of the energy-saving device in the embodiment of the present disclosure may be understood with reference to the description of the energy-saving method in the embodiment of the present disclosure.

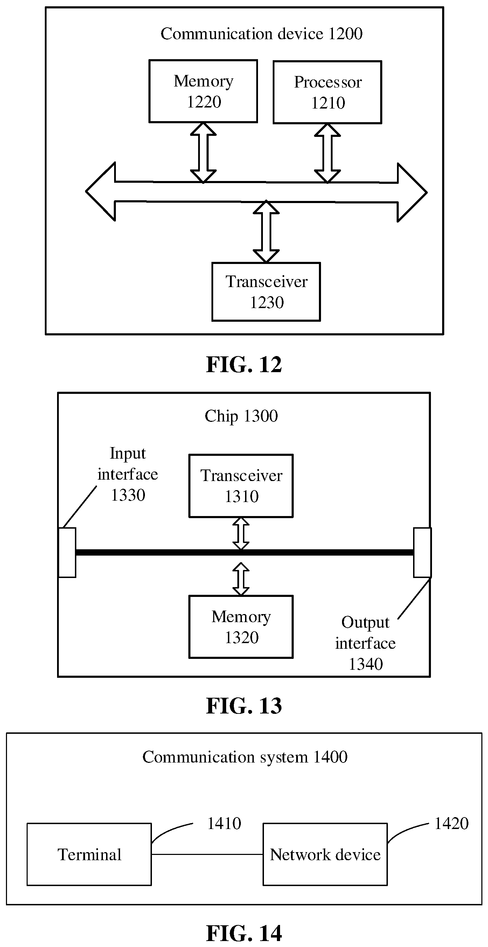

FIG. 12 is a schematic structural diagram of a communication device 1200 according to an embodiment of the present disclosure. The communication device may be a terminal or a network device. The communication device 1200 shown in FIG. 12 includes a processor 1210, and the processor 1210 may invoke and execute a computer program from a memory to implement the method in the embodiment of the present disclosure.

Optionally, as shown in FIG. 12, the communication device 1200 may further include a memory 1220. The processor 1210 may invoke and execute a computer program from the memory 1220 to implement the method in the embodiment of the present disclosure.

The memory 1220 may be a separate device independent of the processor 1210 or may be integrated into the processor 1210.

Optionally, as shown in FIG. 12, the communication device 1200 may further include a transceiver 1230. The processor 1210 may control the transceiver 1230 to communicate with other devices, in particular, to send information or data to other devices, or receive information or data sent by other devices.

The transceiver 1230 may include a transmitter and a receiver. The transceiver 1230 may further include an antenna(s), the number of which may be one or more.

Optionally, the communication device 1200 may specifically be a network device in the embodiment of the present disclosure, and the communication device 1200 may implement the corresponding process implemented by the network device in each method of the embodiments of the present disclosure, which will not be elaborated herein for simplicity.

Optionally, the communication device 1200 may specifically be a mobile terminal/terminal in the embodiment of the present disclosure, and the communication device 1200 may implement the corresponding process implemented by the mobile terminal/terminal in each method of the embodiments of the present disclosure, which will not be elaborated herein for simplicity.

FIG. 13 is a schematic structural diagram of a chip according to an embodiment of the present disclosure. The chip 1300 shown in FIG. 13 includes a processor 1310 that may invoke and execute a computer program from a memory to implement the methods in the embodiments of the present disclosure.

Optionally, as shown in FIG. 13, the chip 1300 may further include a memory 1320. The processor 1310 may invoke and execute a computer program from the memory 1320 to implement the methods in the embodiments of the present disclosure.

The memory 1320 may be a separate device independent of the processor 1310 or may be integrated into the processor 1310.

Optionally, the chip 1300 may further include an input interface 1330. The processor 1310 may control the input interface 1330 to communicate with other devices or chips, and in particular may obtain information or data sent by other devices or chips.

Optionally, the chip 1300 may further include an output interface 1340. The processor 1310 may control the output interface 1340 to communicate with other devices or chips, and in particular may output information or data to other devices or chips.

Optionally, the chip may be applied to the network device in the embodiments of the present disclosure, and the chip may implement the corresponding flows implemented by the network device in each method of the embodiment of the disclosure, which will not be elaborated herein for simplicity.

Optionally, the chip may be applied to the mobile terminal/terminal in the embodiments of the present disclosure, and the chip may implement the corresponding flows implemented by the mobile terminal/terminal in each method of the embodiment of the disclosure, which will not be elaborated herein for simplicity.

It is to be understood that chips mentioned in the embodiments of the present disclosure may also be referred to as system level chips, system chips, chip systems or on-chip system chips, etc.

FIG. 14 is a schematic block diagram of a communication system according to an embodiment of the present disclosure. As shown in FIG. 14, the communication system 1400 includes a terminal 1410 and a network device 1420.

The terminal 1410 may be configured to implement the corresponding functions implemented by the terminal in the above-described methods, and the network device 1420 may be configured to implement the corresponding functions implemented by the network device in the above-described methods, which will not be elaborated herein for simplicity.

It is to be understood that the processor of the embodiments of the disclosure may be an integrated circuit chip with signal processing capacity. In an implementation process, various steps of the above method embodiments may be completed by an integrated logic circuit of hardware in the processor or an instruction in the form of software. The above processor may be a general-purpose processor, a Digital Signal Processor (DSP), an Application Specific Integrated Circuit (ASIC), a Field Programmable Gate Array (FPGA), or other programmable logic devices, discrete gate or transistor logic devices, and discrete hardware components. Various methods, steps, and logical block diagrams disclosed in the embodiments of the disclosure may be implemented or performed. The general-purpose processor may be a microprocessor, any conventional processor, or the like. Steps of the methods disclosed with reference to the embodiments of the disclosure may be directly performed and accomplished by a hardware decoding processor, or may be performed and accomplished by a combination of hardware and software modules in the decoding processor. The software module may be located in a storage medium mature in the art, such as a random access memory, a flash memory, a read-only memory, a programmable read-only memory or electrically erasable programmable memory, or a register. The storage medium is located in the memory, and the processor reads information in the memory and completes the steps in the foregoing methods in combination with hardware of the processor.

It may be understood that the memory in the embodiments of the disclosure may be a volatile memory or a nonvolatile memory, or may include a volatile memory and a nonvolatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a RAM, which is used as an external high-speed cache. By way of example but not restrictive description, many forms of RAMs may be used, for example, a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), and a Direct Rambus RAM (DR RAM). It is to be noted that the memory of the systems and methods described in this specification includes but is not limited to these and any other proper types of memories.

It is to be understood that the abovementioned memories are exemplary but not restrictive, for example, the memory in the embodiments of the disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), and a Direct Rambus RAM (DR RAM). That is to say, the memories described in the embodiment of the disclosure are intended to include, but not limited to, these and any other suitable types of memories.

The embodiments of the disclosure further provide a computer-readable storage medium, which is configured to store a computer program.

Optionally, the computer-readable storage medium may be applied to the network device in the embodiments of the disclosure. The computer program enables a computer to execute corresponding flows implemented by the network device in each method of the embodiment of the disclosure, which will not be elaborated here for simplicity.

Optionally, the computer-readable storage medium may be applied to the mobile terminal/terminal in the embodiments of the disclosure. The computer program enables a computer to execute corresponding flows implemented by the mobile terminal/terminal in each method of the embodiment of the disclosure, which will not be elaborated here for simplicity.

The embodiments of the disclosure further provide a computer program product, which includes a computer program instruction.

Optionally, the computer program product may be applied to a network device in the embodiments of the disclosure. The computer program instruction enables a computer to execute corresponding flows implemented by the network device in each method of the embodiment of the disclosure, which will not be elaborated here for simplicity.

Optionally, the computer program product may be applied to the mobile terminal/terminal in the embodiments of the disclosure. The computer program instruction enables a computer to execute corresponding flows implemented by the mobile terminal/terminal in each method of the embodiment of the disclosure, which will not be elaborated herein for simplicity.

The embodiments of the disclosure further provide a computer program.

Optionally, the computer program may be applied to the network device in the embodiments of the disclosure. The computer program runs in a computer to enable the computer to execute corresponding flows implemented by the network device in each method of the embodiment of the disclosure, which will not be elaborated herein for simplicity.

Optionally, the computer program may be applied to the mobile terminal/terminal in the embodiments of the disclosure. When running on a computer, the computer program enables a computer to execute corresponding flows implemented by the mobile terminal/terminal in each method of the embodiment of the disclosure, which will not be elaborated here for simplicity.

Those of ordinary skill in the art may be aware that the units and algorithm steps in the examples described with reference to the embodiments disclosed in this specification can be implemented by electronic hardware or a combination of computer software and electronic hardware. Whether the functions are performed by hardware or software depends on particular applications and design constraints of the technical schemes. A person skilled in the art may realize the described functions for each particular disclosure by different methods, but it is not considered that the implementation is beyond the scope of the disclosure.

It may be clearly understood by a person skilled in the art that, for the purpose of convenient and brief description, for a detailed working process of the foregoing system, apparatus, and unit, reference may be made to a corresponding process in the foregoing method embodiments, and details are not described again herein.

In the several embodiments provided in the disclosure, it is to be understood that the disclosed system, apparatus, and method may be implemented in other modes. For example, the apparatus embodiment described above is only schematic, and for example, division of the units is only logic function division, and other division manners may be adopted during practical implementation. For example, multiple units or components may be combined or integrated into another system, or some characteristics may be neglected or not executed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separated, and the components displayed as units may or may not be physical units, and may be located in one place or may be distributed over multiple network units. Some or all of the units may be selected according to actual needs to achieve the objectives of the schemes of the embodiments.

In addition, functional units in various embodiments of the disclosure may be integrated into one processing unit, or each of the units may be physically separated, or two or more units may be integrated into one unit.

When the functions are realized in a form of a software functional unit and sold or used as an independent product, they may be stored in a computer-readable storage medium. In view of this understanding, the technical schemes of the embodiments of the disclosure essentially or the parts that contribute to the prior art, or part of the technical schemes can be embodied in the form of a software product. The computer software product is stored in a storage medium, including multiple instructions for causing a computer device (which may be a personal computer, a server, or a network device, and the like) to execute all or part of the steps of the method described in the embodiments of the disclosure. The foregoing storage medium includes a USB flash disk, a mobile hard disk drive, an ROM, an RAM, and various media that can store program codes, such as a magnetic disk or an optical disk.

The above descriptions are merely specific implementations of the disclosure, but are not intended to limit the scope of protection of the disclosure. Any variation or replacement readily figured out by a person skilled in the art within the technical scope disclosed in the disclosure shall fall within the scope of protection of the disclosure. Therefore, the scope of protection of the disclosure is defined by the scope of protection of the claims.

## Claims

1. An energy-saving method, comprising:
receiving, by a terminal, first configuration information sent by a network device, wherein the first configuration information is for configuring a cell Discontinuous Transmission, DTX, and/or a cell Discontinuous Reception, DRX.

2. The method of claim 1, wherein the first configuration information comprises at least one of:
first information for determining a DTX period of a cell;
second information for determining a start time of the cell DTX; or
third information for determining a time length of the cell DTX.

3. The method of claim 2, wherein the first configuration information is for determining a cell DTX active duration and a cell DTX inactive duration.

4. The method of claim 3, wherein
the cell DTX active duration has a following characteristic: the network device is able to send downlink data and/or signals during the cell DTX active duration; and
the cell DTX inactive duration has a following characteristic: the network device is unable to send the downlink data and/or the signals during the cell DTX inactive duration.

5. The method of any one of claims 2 to 4, wherein the first configuration information further comprises a first timer, an operating duration of the first timer is in the cell DTX active duration; and starting of the first timer is triggered based on a following condition:
the network device sends the downlink data and/or the signals during the cell DTX active duration.

6. The method of any one of claims 2 to 5, further comprising:
not monitoring, by the terminal, a Physical Downlink Control Channel, PDCCH, in a case where the cell is in the DTX inactive duration; or
monitoring, by the terminal, the PDCCH in a case where the cell is in the DTX active duration and the terminal is in the DRX active duration.

7. The method of claim 6, further comprising:
not stopping, by the terminal, a DRX timer in the case where the cell is in the DTX inactive duration; or
stopping, by the terminal, the DRX timer in the case where the cell is in the DTX inactive duration.

8. The method of any one of claims 2 to 7, further comprising:
receiving, by the terminal, second configuration information sent by the network device, wherein the second configuration information is for configuring a first DRX and a second DRX of the terminal, the first DRX being associated with an energy-saving state of the cell, and the second DRX being associated with a non-energy-saving state of the cell.

9. The method of claim 8, further comprising:
receiving, by the terminal, a first command sent by the network device, and activating the first DRX of the terminal based on the first command.

10. The method of claim 9, wherein the first command is for indicating at least one of: the cell enters the energy-saving state, the cell DTX is activated, or activation of the first DRX of the terminal.

11. The method of claim 8, further comprising:
receiving, by the terminal, a second command sent by the network device, and activating the second DRX of the terminal based on the second command.

12. The method of claim 11, wherein the second command is for indicating at least one of: the cell enters the non-energy-saving state, the cell DTX is deactivated, or activation of the second DRX of the terminal.

13. The method of any one of claims 2 to 12, wherein transmission positions of a Master Information Block, MIB, and/or a System Information Block 1, SIB1, are in the cell DTX active duration.

14. The method of any one of claims 2 to 13, further comprising:
sending, by the terminal, a first request message to the network device, wherein the first request message is for requesting system information, and the first request message is further for triggering the cell to enter a non-energy-saving state.

15. The method of claim 14, wherein after entering the non-energy-saving state, the cell enters an energy-saving state after a second timer expires or a first counter reaches a maximum value.

16. The method of claim 15, wherein the first counter counts based on a granularity of a first period, the first period being the DTX period, a transmission period of an MIB, a transmission period of an SIB1, or a transmission period of the requested system information.

17. The method of claim 15 or 16, wherein a duration of the second timer or the maximum value of the first counter is configured by a system broadcast message.

18. The method of any one of claims 2 to 17, further comprising:
receiving, by the terminal, a paging message on a paging occasion, wherein the paging message is sent by the network device on the paging occasion within the cell DTX active duration.

19. The method of any one of claims 1 to 18, wherein the first configuration information comprises at least one of:
fourth information for determining a DRX period of a cell;
fifth information for determining a start time of the cell DRX; or
sixth information for determining a time length of the cell DRX.

20. The method of claim 19, wherein the first configuration information is for determining a cell DRX active duration and a cell DRX inactive duration.

21. The method of claim 20, wherein
the cell DRX active duration has a following characteristic: the network device is able to receive uplink data and/or signals during the cell DRX active duration; and
the cell DRX inactive duration has a following characteristic: the network device is unable to receive the uplink data and/or the signals during the cell DRX inactive duration.

22. The method of any one of claims 19 to 21, further comprising:
not performing, by the terminal, a corresponding uplink transmission on an uplink resource within the cell DRX inactive duration; and/or
performing, by the terminal, a corresponding uplink transmission on the uplink resource within the cell DRX active duration.

23. The method of claim 22, wherein the uplink resource comprises at least one of: a Sounding Reference Signal, SRS, resource, a Configured Grant, CG, resource, a Physical Uplink Control Channel, PUCCH, resource, or an uplink scheduling resource.

24. The method of claim 22 or 23, wherein after the corresponding uplink transmission is not performed, the method further comprises:
after waiting until arrival of the cell DTX active duration, performing, by the terminal, the corresponding uplink transmission on the uplink resource within the cell DRX active duration.

25. The method of any one of claims 19 to 24, wherein a transmission position of a Random Access Channel Occasion, RO, is located within the cell DRX active duration; or an RO located within the cell DRX active duration is a valid RO.

26. The method of claim 25, further comprising:
selecting, by the terminal, the RO within the cell DRX active duration to initiate a random access procedure, wherein the random access procedure is for triggering the cell to enter the non-energy-saving state.

27. The method of claim 26, wherein after entering the non-energy-saving state, the cell enters the energy-saving state after a third timer expires or a second counter reaches a maximum value.

28. The method of claim 27, wherein the second counter counts based on a granularity of a second period, the second period being the DTX period or an RO period.

29. The method of claim 27 or 28, wherein a duration of the third timer or the maximum value of the second counter is configured by the system broadcast message.

30. The method of any one of claims 1 to 29, wherein
a cell DTX corresponding to a connected state is configured independently from a cell DTX corresponding to an idle state and/or an inactive state; or
the cell DTX corresponding to the connected state is configured collectively with the cell DTX corresponding to the idle state and/or the inactive state.

31. The method of any one of claims 1 to 30, wherein
a cell DRX corresponding to the connected state is configured independently from a cell DRX corresponding to the idle state and/or the inactive state; or
the cell DRX corresponding to the connected state is configured collectively with the cell DRX corresponding to the idle state and/or the inactive state.

32. The method of any one of claims 1 to 31, wherein the first configuration information is for configuring a plurality of cell DTXs, each DTX being associated with a terminal group or a service group.

33. The method of claim 32, further comprising:
determining, by the terminal, a cell DTX corresponding to the terminal based on a terminal group or a service group to which the terminal belongs.

34. The method of any one of claims 1 to 33, further comprising:
performing, by the terminal, cell selection and/or reselection based on a first parameter, wherein the first parameter is set based on a terminal type and/or a service type.

35. The method of claim 34, wherein the first parameter comprises at least one of: a parameter 'cell barred', an exclusion list of intra-frequency cells, an exclusion list of inter-frequency cells, or a parameter of the cell selection and/or reselection.

36. The method of any one of claims 1 to 34, further comprising:
performing, by the terminal, cell handover, wherein a target cell corresponding to the cell handover is determined based on the terminal type and/or the service type.

37. The method of any one of claims 1 to 36, wherein
the first configuration information is carried in Radio Resource Control, RRC, signaling; and/or
the first configuration information is carried in a system broadcast message.

38. An energy-saving method, comprising:
receiving, by a terminal, third configuration information sent by a network device, wherein the third configuration information is for configuring a measurement resource corresponding to a cell being in an active state and/or a measurement resource corresponding to the cell being in a deactivated state.

39. The method of claim 38, wherein the third configuration information is for configuring a first measurement resource and a second measurement resource, the first measurement resource being associated with the active state of the cell, and the second measurement resource being associated with the deactivated state of the cell.

40. The method of claim 39, wherein
in a case where the cell is in the deactivated state, the first measurement resource is in the deactivated state and/or the second measurement resource is in the active state; or
in a case where the cell is in the active state, the second measurement resource is in the deactivated state and/or the first measurement resource is in the active state.

41. The method of claim 39 or 40, further comprising:
in the case where the cell is in the deactivated state, performing, by the terminal, measurement based on the second measurement resource; or
in the case where the cell is in the active state, performing, by the terminal, the measurement based on the first measurement resource.

42. The method of claim 38, wherein the third configuration information is for configuring a measurement window, a measurement resource within the measurement window being associated with the deactivated state of the cell.

43. The method of claim 42, further comprising:
in the case where the cell is in the deactivated state, performing, by the terminal, measurement on the measurement resource within the measurement window.

44. The method of claim 42 or 43, wherein the third configuration information comprises at least one of:
seventh information for determining a period of the measurement window;
eighth information for determining a start time of the measurement window; or
ninth information for determining a duration of the measurement window.

45. The method of claim 38, wherein the third configuration information comprises a first bitmap, each bit in the first bitmap corresponding to a periodic measurement resource, and a value of the bit indicating whether a measurement resource corresponding to the bit is used for measurement when the cell is in the deactivated state.

46. The method of claim 38, wherein the third configuration information comprises a first pattern, the first pattern being a pattern of a measurement resource used for measurement when the cell is in the deactivated state.

47. An energy-saving method, comprising:
receiving, by a terminal, fourth configuration information sent by a network device, wherein the fourth configuration information is for configuring an association relationship between serving cells, and a serving cell having the association relationship with another serving cell is able to borrow a Synchronization Signal Block, SSB-related measurement result of the another serving cell.

48. The method of claim 47, further comprising:
receiving, by the terminal, a third command sent by the network device, wherein the third command is for adjusting the association relationship.

49. The method of claim 48, wherein the third command is a Media Access Control Control Element, MAC CE, or Downlink Control Information, DCI.

50. The method of any one of claims 47 to 49, wherein
the association relationship is configured between two inter-band serving cells; and/or the association relationship is configured between two intra-band serving cells.

51. The method of any one of claims 47 to 50, wherein in a case where the association relationship is configured between the two inter-band serving cells, a distance between frequency spectra corresponding to the two serving cells is less than or equal to a frequency spectrum distance threshold.

52. The method of any one of claims 47 to 51, further comprising:
reporting, by the terminal, a first capability to the network device, wherein the first capability indicates at least one of: a combination of frequency bands supported by the terminal or a frequency spectrum distance threshold supported by the terminal.

53. An energy-saving method, comprising:
sending, by a network device, first configuration information to a terminal, wherein the first configuration information is for configuring a cell Discontinuous Transmission, DTX, and/or a cell Discontinuous Reception, DRX.

54. The method of claim 53, wherein the first configuration information comprises at least one of:
first information for determining a D TX period of a cell;
second information for determining a start time of the cell DTX; or
third information for determining a time length of the cell DTX.

55. The method of claim 54, wherein the first configuration information is for determining a cell DTX active duration and a cell DTX inactive duration.

56. The method of claim 55, wherein
the cell DTX active duration has a following characteristic: the network device is able to send downlink data and/or signals during the cell DTX active duration; and
the cell DTX inactive duration has a following characteristic: the network device is unable to send the downlink data and/or the signals during the cell DTX inactive duration.

57. The method of any one of claims 54 to 56, wherein the first configuration information further comprises a first timer, an operating duration of the first timer is in the cell DTX active duration; and starting of the first timer is triggered based on a following condition:
the network device sends the downlink data and/or the signals during the cell DTX active duration.

58. The method of any one of claims 54 to 57, further comprising:
sending, by the network device, second configuration information to the terminal, wherein the second configuration information is for configuring a first DRX and a second DRX of the terminal, the first DRX being associated with an energy-saving state of the cell, and the second DRX being associated with a non-energy-saving state of the cell.

59. The method of claim 58, further comprising:
sending, by the network device, a first command to the terminal, wherein the first command is for indicating at least one of: the cell enters the energy-saving state, the cell DTX is activated, or activation of the first DRX of the terminal.

60. The method of claim 58, further comprising:
sending, by the network device, a second command to the terminal, wherein the second command is for indicating at least one of: the cell enters the non-energy-saving state, the cell DTX is deactivated, or activation of the second DRX of the terminal.

61. The method of any one of claims 54 to 60, wherein transmission positions of a Master Information Block, MIB, and/or a System Information Block 1, SIB1, are in the cell DTX active duration.

62. The method of any one of claims 54 to 61, further comprising:
receiving, by the network device, a first request message sent by the terminal, wherein the first request message is for requesting system information, and the first request message is further for triggering the cell to enter a non-energy-saving state.

63. The method of claim 62, wherein after entering the non-energy-saving state, the cell enters an energy-saving state after a second timer expires or a first counter reaches a maximum value.

64. The method of claim 63, wherein the first counter counts based on a granularity of a first period, the first period being the DTX period, a transmission period of an MIB, a transmission period of an SIB1, or a transmission period of the requested system information.

65. The method of claim 63 or 64, wherein a duration of the second timer or the maximum value of the first counter is configured by a system broadcast message.

66. The method of any one of claims 54 to 65, further comprising:
sending, by the network device, a paging message on a paging occasion within the cell DTX active duration.

67. The method of any one of claims 53 to 66, wherein the first configuration information comprises at least one of:
fourth information for determining a DRX period of a cell;
fifth information for determining a start time of the cell DRX; or
sixth information for determining a time length of the cell DRX.

68. The method of claim 67, wherein the first configuration information is for determining a cell DRX active duration and a cell DRX inactive duration.

69. The method of claim 68, wherein
the cell DRX active duration has a following characteristic: the network device is able to receive uplink data and/or signals during the cell DRX active duration; and
the cell DRX inactive duration has a following characteristic: the network device is unable to receive the uplink data and/or the signals during the cell DRX inactive duration.

70. The method of any one of claims 67 to 69, wherein a transmission position of a Random Access Channel Occasion, RO, is located within the cell DRX active duration; or an RO located within the cell DRX active duration is a valid RO.

71. The method of claim 70, further comprising:
receiving, by the network device, a preamble on the RO within the cell DRX active duration, and triggering the cell to enter the non-energy-saving state.

72. The method of claim 71, wherein after entering the non-energy-saving state, the cell enters the energy-saving state after a third timer expires or a second counter reaches a maximum value.

73. The method of claim 72, wherein the second counter counts based on a granularity of a second period, the second period being the DTX period or an RO period.

74. The method of claim 72 or 73, wherein a duration of the third timer or the maximum value of the second counter is configured by the system broadcast message.

75. The method of any one of claims 53 to 74, wherein
a cell DTX corresponding to a connected state is configured independently from a cell DTX corresponding to an idle state and/or an inactive state; or
the cell DTX corresponding to the connected state is configured collectively with the cell DTX corresponding to the idle state and/or the inactive state.

76. The method of any one of claims 53 to 75, wherein
a cell DRX corresponding to the connected state is configured independently from a cell DRX corresponding to the idle state and/or the inactive state; or
the cell DRX corresponding to the connected state is configured collectively with the cell DRX corresponding to the idle state and/or the inactive state.

77. The method of any one of claims 53 to 76, wherein the first configuration information is for configuring a plurality of cell DTXs, each DTX being associated with a terminal group or a service group.

78. The method of any one of claims 53 to 77, further comprising:
configuring, by the network device, a first parameter for the terminal, wherein the first parameter is for the terminal to perform cell selection and/or reselection, and the first parameter is set based on a terminal type and/or a service type.

79. The method of claim 78, wherein the first parameter comprises at least one of: a parameter 'cell barred', an exclusion list of intra-frequency cells, an exclusion list of inter-frequency cells, or a cell selection and/or reselection parameter.

80. The method of any one of claims 53 to 79, further comprising:
determining, by the network device, a target cell corresponding to cell handover based on the terminal type and/or the service type.

81. The method of any one of claims 53 to 80, wherein
the first configuration information is carried in Radio Resource Control, RRC, signaling; and/or
the first configuration information is carried in a system broadcast message.

82. An energy-saving method, comprising:
sending, by a network device, third configuration information to a terminal, wherein the third configuration information is for configuring a measurement resource corresponding to a cell being in an active state and/or a measurement resource corresponding to the cell being in a deactivated state.

83. The method of claim 82, wherein the third configuration information is for configuring a first measurement resource and a second measurement resource, the first measurement resource being associated with the active state of the cell, and the second measurement resource being associated with the deactivated state of the cell.

84. The method of claim 83, wherein
in a case where the cell is in the deactivated state, the first measurement resource is in the deactivated state and/or the second measurement resource is in the active state; or
in a case where the cell is in the active state, the second measurement resource is in the deactivated state and/or the first measurement resource is in the active state.

85. The method of claim 82, wherein the third configuration information is for configuring a measurement window, a measurement resource within the measurement window being associated with the deactivated state of the cell.

86. The method of claim 85, wherein the third configuration information comprises at least one of:
seventh information for determining a period of the measurement window;
eighth information for determining a start time of the measurement window; or
ninth information for determining a duration of the measurement window.

87. The method of claim 82, wherein the third configuration information comprises a first bitmap, each bit in the first bitmap corresponding to a periodic measurement resource, and a value of the bit indicating whether a measurement resource corresponding to the bit is used for measurement when the cell is in the deactivated state.

88. The method of claim 82, wherein the third configuration information comprises a first pattern, the first pattern being a pattern of a measurement resource used for measurement when the cell is in the deactivated state.

89. An energy-saving method, comprising:
sending, by a network device, fourth configuration information to a terminal, wherein the fourth configuration information is for configuring an association relationship between serving cells, and a serving cell having the association relationship with another serving cell is able to borrow a Synchronization Signal Block, SSB-related measurement result of the another serving cell.

90. The method of claim 89, further comprising:
sending, by a network device, a third command to a terminal, wherein the third command is for adjusting the association relationship.

91. The method of claim 90, wherein the third command is a Media Access Control Control Element, MAC CE, or Downlink Control Information, DCI.

92. The method of any one of claims 89 to 91, wherein
the association relationship is configured between two inter-band serving cells; and/or
the association relationship is configured between two intra-band serving cells.

93. The method of any one of claims 89 to 92, wherein in a case where the association relationship is configured between the two inter-band serving cells, a distance between frequency spectra corresponding to the two serving cells is less than or equal to a frequency spectrum distance threshold.

94. The method of any one of claims 89 to 93, further comprising:
receiving, by the network device, a first capability reported by the terminal, wherein the first capability indicates at least one of: a combination of frequency bands supported by the terminal or a frequency spectrum distance threshold supported by the terminal.

95. An energy-saving device, applied to a terminal, the device comprising:
a receiving unit, configured to receive first configuration information sent by a network device, wherein the first configuration information is for configuring a cell Discontinuous Transmission, DTX, and/or a cell Discontinuous Reception, DRX.

96. An energy-saving device, applied to a terminal, the device comprising:
a receiving unit, configured to receive third configuration information sent by a network device, wherein the third configuration information is for configuring a measurement resource corresponding to a cell being in an active state and/or a measurement resource corresponding to the cell being in a deactivated state.

97. An energy-saving device, applied to a terminal, the device comprising:
a receiving unit, configured to receive fourth configuration information sent by a network device, wherein the fourth configuration information is for configuring an association relationship between serving cells, and a serving cell having the association relationship with another serving cell is able to borrow a Synchronization Signal Block, SSB-related measurement result of the another serving cell.

98. An energy-saving device, applied to a network device, the device comprising:
a sending unit, configured to send first configuration information to a terminal, wherein the first configuration information is for configuring a cell Discontinuous Transmission, DTX, and/or a cell Discontinuous Reception, DRX.

99. An energy-saving device, applied to a network device, the device comprising:
a sending unit, configured to send third configuration information to a terminal, wherein the third configuration information is for configuring a measurement resource corresponding to a cell being in an active state and/or a measurement resource corresponding to the cell being in a deactivated state.

100. An energy-saving device, applied to a network device, the device comprising:
a sending unit, configured to send fourth configuration information to a terminal, wherein the fourth configuration information is for configuring an association relationship between serving cells, and a serving cell having the association relationship with another serving cell is able to borrow a Synchronization Signal Block, SSB-related measurement result of the another serving cell.

101. A terminal comprising: a processor and a memory, wherein the memory is configured to store a computer program, and the processor is configured to invoke and execute the computer program stored in the memory to cause the terminal to perform the method of any one of claims 1 to 52.

102. A network device comprising: a processor and a memory, wherein the memory is configured to store a computer program, and the processor is configured to invoke and execute the computer program stored in the memory to cause the network device to perform the method of any one of claims 53 to 94.

103. A chip comprising: a processor configured to invoke and execute a computer program from a memory, to cause a device on which the chip is mounted to perform the method of any one of claims 1 to 52, or perform the method of any one of claims 53 to 94.

104. A computer-readable storage medium, configured to store a computer program causing a computer to perform the method of any one of claims 1 to 52, or perform the method of any one of claims 53 to 94.

105. A computer program product, comprising computer program instructions causing a computer to perform the method of any one of claims 1 to 52 or perform the method of any one of claims 53 to 94.

106. A computer program, causing a computer to perform the method of any one of claims 1 to 52, or perform the method of any one of claims 53 to 94.
